# EUROPÄISCHE PATENTANMELDUNG

(11) **EP 2 474 491 A1**
(43) Veröffentlichungstag der Anmeldung: **11.07.2012**
(21) Anmeldenummer: 11165341.6
(22) Anmeldetag: 09.05.2011
(51) Int. Cl.: B65G 69/32

(54) **Torabdichtung für Verladeöffnungen**

(30) Priorität: 10.01.2011 DE 202011000049 U
(71) Anmelder: Novoferm Nederland B.V., 4181 CA Waardenburg (NL)
(72) Erfinder:
(74) Vertreter: Albrecht, Rainer Harald

(57) **Zusammenfassung**

Die Erfindung betrifft eine Torabdichtung für Verladeöffnungen zur Abdichtung gegen Witterungseinflüsse zwischen einer die Verladeöffnung umgebenden Wand und einem vor der Verladeöffnung positionierten Fahrzeug. Die Torabdichtung besteht erfindungsgemäß aus einer am Umfang der Verladeöffnung (2) wandseitig angeordneten Dichtung (1), die eine Mehrzahl nebeneinander angeordneter flexibler Lippen (4) aufweist.

## Beschreibung

Die Erfindung betrifft eine Torabdichtung für Verladeöffnungen zur Abdichtung gegen Witterungseinflüsse zwischen einer die Verladeöffnung umgebenden Wand und einem vor der Verladeöffnung positionierten Fahrzeug. Unter den Begriff Fahrzeug sollen LKWs, abnehmbare LKW-Aufsätze, Busse, Kleintransporter und Kastenwagen fallen.

Aus der Praxis ist eine Torabdichtung aus eindrückbaren Schaumstoffkissen bekannt, die an drei Seiten neben und über einer gebäudeseitigen Verladeöffnung angeordnet sind. Die Schaumstoffkissen sind auf einer Holzunterkonstruktion befestigt und mit verstärkten Kunststofftüchern verkleidet. Sie formen eine Abdichtung zwischen einem LKW-Aufbau und einer die Verladeöffnung umgebenden Gebäudewand und bieten Schutz vor Zugluft, Regen und Wind.

Unbefriedigend ist allerdings die Abdichtung an der Rückseite von Lieferwagen und Kleintransportern, die unter anderem für den Paketdienst und Botenvertrieb in Städten und Regionen eingesetzt werden. Grund für die unzureichende Abdichtung ist die große Verschiedenheit der Karosserieformen an diesen Fahrzeugen. Hinzu kommt das Problem, dass Scharniere an der geöffneten Fahrzeugrückseite, Türfesthalter, Stoßfänger und andere Fahrzeugteile an der Fahrzeugrückseite vorstehen. Die bekannte Torabdichtung ist nicht in der Lage, derartig vorstehende Fahrzeugteile so zu umschließen, dass die Schaumstoffkissen noch dicht an den übrigen Flächen der Fahrzeugrückseite anliegen.

Vor diesem Hintergrund liegt der Erfindung die Aufgabe zugrunde, eine Torabdichtung für Verladeöffnungen anzugeben, die sehr flexibel ist und ausreichend

Raum bietet für vorstehende Fahrzeugteile, z. B. vorstehende Scharniere, Stoßfänger und dergleichen.

Gegenstand der Erfindung und Lösung dieser Aufgabe ist eine Torabdichtung für Verladeöffnungen nach Anspruch 1. Die erfindungsgemäße Torabdichtung besteht aus einer am Umfang der Verladeöffnung wandseitig angeordneten Dichtung, die eine Mehrzahl nebeneinander angeordneter flexibler Lippen aufweist. Die Dichtung ist zweckmäßig an drei Seiten neben und über der Verladeöffnung angeordnet. Im Rahmen der Erfindung liegt es, dass die Dichtung sich nicht über die gesamte Höhe und/oder die gesamte Breite der Verladeöffnung erstreckt, sondern nur in einem oder mehreren Abschnitten am Umfang der Verladeöffnung angeordnet ist. Die Anordnung der Dichtung kann insbesondere auf solche Abschnitte am Umfang der Verladeöffnung beschränkt werden, die mit stark gekrümmten Karosserieabschnitten eines Fahrzeuges und/oder vorstehenden Fahrzeugteilen an der Fahrzeugrückseite in Kontakt kommen, während in anderen Abschnitten am Umfang der Verladeöffnung Kissendichtungen nach dem Stand der Technik vorgesehen werden. Die erfindungsgemäße Dichtung kann mit konventionellen Dichtungen beliebig kombiniert werden. Insbesondere kann die erfindungsgemäße Dichtung auch unterhalb der Verladeöffnung angeordnet werden.

Die flexiblen Lippen der erfindungsgemäßen Dichtung sind senkrecht zur Projektionsfläche der Verladeöffnung ausgerichtet und überbrücken einen Abstand zwischen der die Verladeöffnung umgebenden Gebäudefläche und einem vor der Verladeöffnung positionierten Fahrzeug. An den Seiten der Verladeöffnung erstrecken sich die Lippen senkrecht, während sie unterhalb und/oberhalb der Verladeöffnung vorzugsweise waagerecht angeordnet sind. Die fahnenförmig vorstehenden flexiblen Lippen weichen beim Auftreffen auf ein Scharnier, einen Stoßfänger, einen Türfesthalter oder ähnliche vorstehender Fahrzeugteile aufgrund ihrer Flexibilität aus und bieten ausreichenden Raum zur Aufnahme solcher vorstehender Fahrzeugteile. Die flexiblen Lippen schmiegen sich an die Fahrzeugrückseite an und bilden eine wirksame Abdichtung an der Fahrzeugrückseite.

Die Breite der Dichtung kann so bemessen werden, dass die für einen Be- oder Endladevorgang geöffnete Rückseite eines vor der Verladeöffnung abgestellten Fahrzeuges vollständig an den fahnenförmig vorstehenden flexiblen Lippen der Dichtung anliegt.

Die Lippen weisen zweckmäßig ein keilförmiges Querschnittsprofil auf und bestehen vorzugsweise aus einem elastomeren Kunststoff.

Es ergeben sich eine Vielzahl von Möglichkeiten für die konstruktive Ausgestaltung der Dichtung. Die Dichtung kann einen gebäudeseitig befestigbaren Rücken und eine Mehrzahl parallel ausgerichteter flexibler Lippen aufweisen, die an ihrer Rückseite mit dem Rücken verbunden sind und fahnenförmig vorstehen. Der Rücken und die vorstehenden flexiblen Lippen können als einstückiges Teil geformt sein, welches beispielsweise durch Spritzgießen oder Strangformen herstellbar ist.

Eine alternative Ausgestaltung der erfindungsgemäßen Dichtung sieht vor, dass die flexiblen Lippen als separate Elemente nebeneinander angeordnet und/oder lösbar an einem Träger befestigt sind. Die Anzahl der nebeneinander angeordneten flexiblen Lippen sowie deren Abstand zueinander ist bei dieser Ausführung der Erfindung variabel, so dass problemlos Anpassungen an die Fahrzeuggröße und Fahrzeugform vorgenommen werden können.

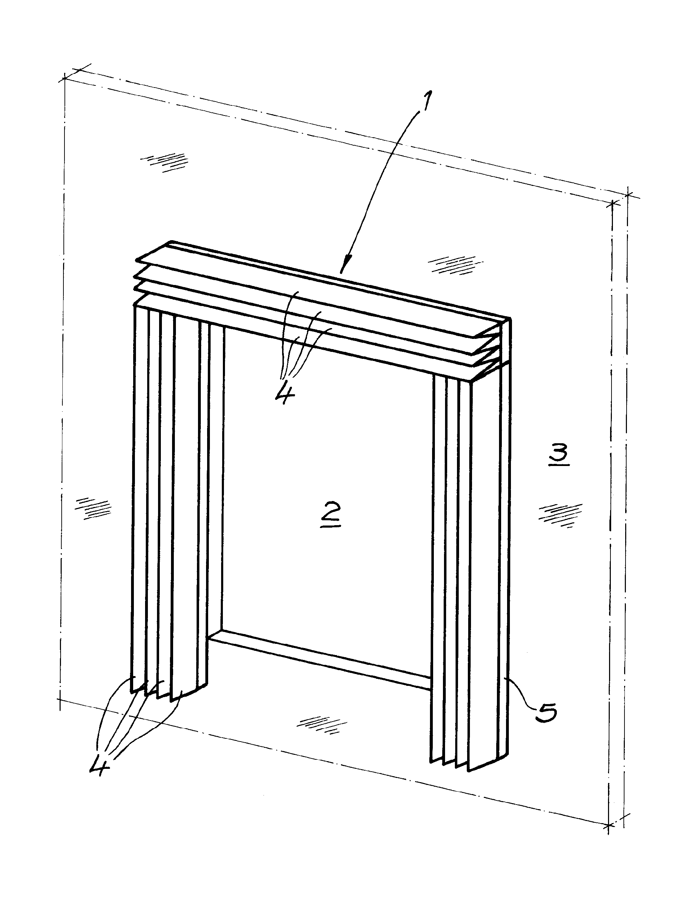

Im Folgenden wird die Erfindung anhand eines Ausführungsbeispiels beschrieben. Die einzige Figur zeigt schematisch eine erfindungsgemäße Dichtung 1 am Umfang einer Verladeöffnung 2. Sie ermöglicht eine Abdichtung zwischen einer die Verladeöffnung 2 umgebenden Wand 3 vor der Verladeöffnung abgestellten Fahrzeug gegen Witterungseinflüsse. Die erfindungsgemäße Dichtung 1, welche den Abstand zwischen der Fahrzeugrückseite und einer die Verladeöffnung 2 umgebenden Gebäudewand 3 überbrückt, verhindert ferner Energieverluste beim Be- oder Entladen des Fahrzeuges und schützt das Ladegut gegen mögliche Beschädigung. Die Dichtung 1 ist an drei Seiten neben und über der Verladeöffnung 2 angeordnet und weist eine Mehrzahl nebeneinander angeordneter flexibler Lippen 4 auf. Die flexiblen Lippen 4 sind senkrecht zur Projektionsfläche der Verladeöffnung ausgerichtet und bilden fahnenförmig von der Wand 3 abstehende Elemente. An den Seiten der Verladeöffnung erstrecken sich die flexiblen Lippen vertikal über die gesamte Höhe oder einen Teil der Höhe der Verladeöffnung. Oberhalb der Verladeöffnung sind die flexiblen Lippen waagerecht ausgerichtet und erstrecken sich über die Breite oder einen Teil der Breite der Verladeöffnung. Aufgrund der Flexibilität der Lippen 4 bietet die in der Figur abgebildete Dichtung 1 ausreichenden Raum für vorstehende Fahrzeugteile, z. B. vorstehende Scharniere und/oder Stoßfänger.

Die Breite der Dichtung 1 ist so gewählt, dass die Rückseite eines vor der Verladeöffnung abgestellten Fahrzeuges vollständig an den vorstehenden flexiblen Lippen 4 der Dichtung 1 anliegt. Die Lippen 4 weisen zweckmäßig ein keilförmiges Querschnittsprofil auf und bestehen vorzugsweise aus einem elastomeren Kunststoff.

Im Ausführungsbeispiel und gemäß einer bevorzugten Ausführung der Erfindung weist die Dichtung 1 einen gebäudeseitig befestigbaren Rücken 5 und eine Mehrzahl parallel ausgerichteter flexibler Lippen 4 auf, die an ihrer Rückseite mit dem Rücken 5 verbunden sind und fahnenförmig vorstehen. Der Rücken 5 und die vorstehenden flexiblen Lippen 4 sind als einstückiges Teil geformt. Alternativ besteht auch die Möglichkeit, dass die flexiblen Lippen als separate Elemente nebeneinander angeordnet werden und/oder lösbar an einem Träger befestigt sind.

## Patentansprüche

1. Torabdichtung für Verladeöffnungen zur Abdichtung gegen Witterungseinflüsse zwischen einer die Verladeöffnung umgebenden Wand und einem vor der Verladeöffnung positionierten Fahrzeug bestehend aus einer am Umfang der Verladeöffnung (2) wandseitig angeordneten Dichtung (1), die eine Mehrzahl nebeneinander angeordneter flexibler Lippen (4) aufweist.

2. Torabdichtung nach Anspruch 1, **dadurch gekennzeichnet, dass** die Dichtung (1) an drei Seiten neben und über der Verladeöffnung (2) angeordnet ist.

3. Torabdichtung nach Anspruch 1 oder 2, **dadurch gekennzeichnet, dass** die Dichtung (1) nur in einem oder mehreren Abschnitten am Umfang der Verladeöffnung (2) angeordnet ist.

4. Torabdichtung nach einem der Ansprüche 1 bis 3, **dadurch gekennzeichnet, dass** die Dichtung (1) unterhalb der Verladeöffnung (2) angeordnet ist.

5. Torabdichtung nach einem der Ansprüche 1 bis 4, **dadurch gekennzeichnet, dass** die flexiblen Lippen (4) senkrecht zur Verladeöffnung (2) ausgerichtet sind und einen Abstand zwischen einer die Verladeöffnung umgebenden Gebäudefläche (3) und einem vor der Verladeöffnung (2) positionierten Fahrzeug überbrücken.

6. Torabdichtung nach einem der Ansprüche 1 bis 5, **dadurch gekennzeichnet, dass** die Breite der Dichtung (1) so gewählt ist, dass die für einen Be- oder Entladevorgang geöffnete Rückseite eines vor der Verladeöffnung abgestellten Fahrzeugs vollständig an den vorstehenden flexiblen Lippen (4) der Dichtung (1) anliegt.

7. Torabdichtung nach einem der Ansprüche 1 bis 6, **dadurch gekennzeichnet, dass** die Lippen (4) ein keilförmiges Querschnittsprofil aufweisen.

8. Torabdichtung nach einem der Ansprüche 1 bis 7, **dadurch gekennzeichnet, dass** die Lippen (4) aus einem elastomeren Kunststoff bestehen.

9. Torabdichtung nach einem der Ansprüche 1 bis 8, **dadurch gekennzeichnet, dass** die Dichtung (1) einen gebäudeseitig befestigbaren Rücken (5) und eine Mehrzahl parallel ausgerichteter flexibler Lippen (4) aufweist, die an ihrer Rückseite mit dem Rücken (5) verbunden sind und fahnenförmig vorstehen.

10. Torabdichtung nach Anspruch 9, **dadurch gekennzeichnet, dass** der Rücken (5) und die vorstehenden flexiblen Lippen (4) als einstückiges Teil geformt sind.

11. Torabdichtung nach einem der Ansprüche 1 bis 8, **dadurch gekennzeichnet, dass** die flexiblen Lippen (4) lösbar an einem Träger befestigt sind.

12. Torabdichtung nach einem der Ansprüche 1 bis 8, **dadurch gekennzeichnet, dass** die flexiblen Lippen (4) der Dichtung als separate Elemente nebeneinander angeordnet sind.
